# EUROPÄISCHE PATENTSCHRIFT

(11) **EP 1 398 544 B1**
(45) Veröffentlichungstag und Bekanntmachung des Hinweises auf die Patenterteilung: **26.03.2008**
(21) Anmeldenummer: 03019723.0
(22) Anmeldetag: 29.08.2003
(51) Int. Cl.: F16H 63/30

(54) **Betätigungsvorrichtung, insbesondere Hydraulik- oder Pneumatikaktuator, für Schaltgetriebe von Kraftfahrzeugen**
Actuating device, in particular a hydraulic or pneumatic actuator for an automotive vehicle gearbox
Organe de commande, en particulier vérin hydraulique ou pneumatique pour boîte de vitesses de véhicule automobile

(30) Priorität: 10.09.2002 DE 10243047
(43) Veröffentlichungstag der Anmeldung: 17.03.2004
(73) Patentinhaber: Hydraulik-Ring GmbH, 97828 Marktheidenfeld (DE)
(72) Erfinder: Maisch, Dieter, 72664 Kohlberg (DE); Weber, Hartmut, 72655 Altdorf (DE); Trzmiel, Alfred, 72662 Grafenberg (DE)
(74) Vertreter: Bergemann, Holger Dirk

(56) Entgegenhaltungen:
- EP-A1- 0 487 861
- DE-A1- 3 213 758

## Beschreibung

Die Erfindung betrifft eine Betätigungsvorrichtung, insbesondere einen Hydraulik- oder Pneumatikaktuator, für Schaltgetriebe von Kraftfahrzeugen, nach dem Oberbegriff des Anspruches 1.

Aus der DE 32 13 758 A1, als nächstliegender Stand der Technik betrachtet, ist bereits ein Pneumatikaktor für Schaltgetriebe mit einem Gehäuse, in dem zwei Kolben untergebracht sind, bekannt. Mit diesen Kolben ist ein Kupplungsteil verschiebbar, das mit einem Schaltteil - d.h. einem Schaltgestänge - verbindbar ist.

Die EP 0 487 861 A1 zeigt eine Betätigungseinrichtung für Schaltgetriebe mit einem Gehäuse, in dem zwei Kolben untergebracht sind, mit denen ein Kupplungsteil verschiebbar ist, das mit einem Schaltteil - d.h. einem Schaltgabel - verbindbar ist.

Weitere bekannte Betätigungsvorrichtungen dieser Art sind für verschiedene Getriebeanwendungen vorgesehen. Hierbei werden Schaltgabeln im Getriebe direkt vom Hydraulik- oder Pneumatikaktuator betätigt. Die Zylindergehäuse dieser Aktuatoren sind in das Getriebegehäuse integriert und bestehen aus Aluminium. Die Schaltgabeln, die die Aktuatoren betätigen, müssen im Getriebe hohe Kräfte übertragen. Daher ist die für die Kraftübertragung massgebende Kontaktstelle bzw. der zugehörige Teil des Aktuators aus hartem, verschleissfestem Material, vorzugsweise Stahl, hergestellt. Aufgrund der Leckageanforderungen, des Gewichtes und des Temperaturverhaltens besteht der Kolben aus demselben Material wie das Aktuator- bzw. Zylindergehäuse, also aus Aluminium. Aus Gründen der Kraftübertragung des Kolbens auf die Schaltgabel sollte dieser aus Stahl hergestellt sein. Bei einem bekannten Aktuator ist das Zylindergehäuse in das Getriebegehäuse integriert. Der Kolben besteht aus mehreren Teilen. Die die Lauf- und Dichtflächen des Kolbens aufweisenden Teile bestehen aus Aluminium, während die Kontaktstelle zur Schaltgabel durch ein Stahlteil gebildet ist. Nachteilig ist, dass der Kolben aus mehreren Teilen besteht, wobei die Laufflächen des Kolbens auf verschiedene Bauteile verteilt sind. Bei der Montage des Kolbens wird ein aus Stahl bestehendes Kontaktstück eingelegt. Anschließend werden die aus Aluminium bestehenden anderen Kolbenteile miteinander verbunden, wie verpreßt, verschraubt oder verschweißt. Nach diesem Verbindungsvorgang besteht die Gefahr, daß die Laufflächen des Kolbens nicht mehr genau zueinander ausgerichtet sind und daher der Kolben nochmals auf einer Maschine nachbearbeitet werden muß, um die erforderlichen geometrischen Anforderungen zu erfüllen. Dies ist aufwendig und teuer.

Der Erfindung liegt die Aufgabe zugrunde, eine Betätigungsvorrichtung dieser Art so auszubilden, daß sie aus wenigen Teilen besteht, die einfach montiert und ohne weitere Nachbearbeitung einwandfrei zueinander ausgerichtet sind.

Diese Aufgabe wird bei einer Betätigungsvorrichtung der gattungsbildenden Art erfindungsgemäß mit den kennzeichnenden Merkmalen des Anspruches 1 gelöst.

Infolge der erfindungsgemäßen Ausbildung sitzen die Kolben lose auf dem Kupplungsteil. Dadurch können sich diese Teile nach der Montage einwandfrei gegeneinander ausrichten und etwaige Ungenauigkeiten einwandfrei ausgleichen. Somit ist eine zusätzliche Nachbearbeitung des Kolbens nach der Montage nicht mehr nötig. Außerdem muß bei der Herstellung der Vorrichtungsteile nicht auf enge Toleranzen geachtet werden, wodurch die Herstellungskosten verringert werden können. Es muß nur der Durchmesser der Laufflächen der Kolben genau bearbeitet werden, um eine Leckage des Aktuators weitgehend zu vermeiden. Die Vorrichtungsteile können beispielsweise auf einer Drehmaschine vollständig vorgefertigt und anschließend beliebig zusammengefügt und zum Aktuator zusammengebaut werden.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:
- Fig. 1: eine erfindungsgemäße Betätigungsvorrichtung mit Kolben im Axialschnitt,
- Fig. 2: eine Darstellung entsprechend Fig. 1 mit den Kolben in einer anderen Stellung,
- Fig. 3 bis 5: jeweils weitere Ausführungsformen von erfindungsgemäßen Betätigungsvorrichtungen in einer Darstellung entsprechend Fig. 1.

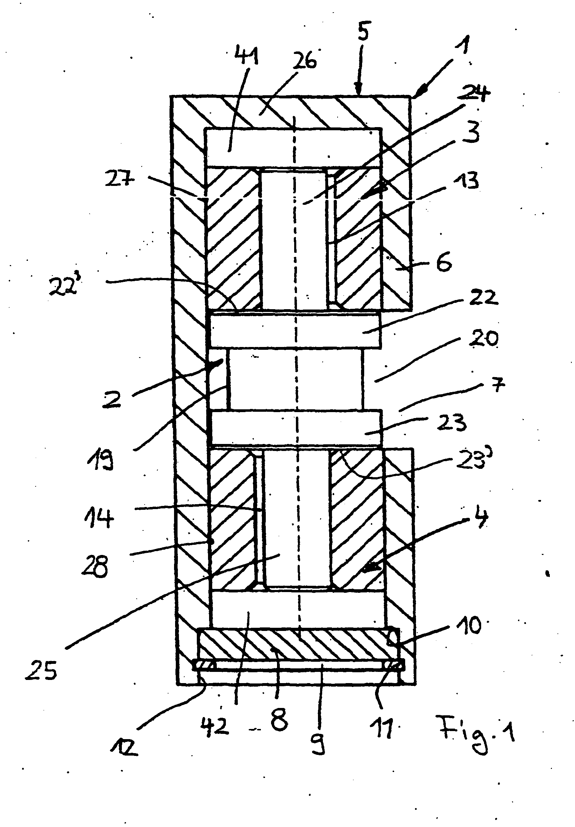

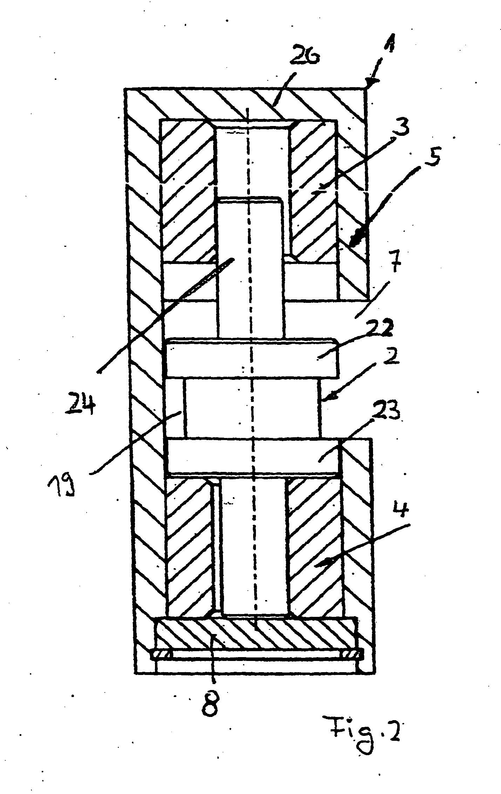

Die in den Fig. 1 bis 5 dargestellten Betätigungsvorrichtungen 1 sind Hydraulik- oder Pneumatikaktuatoren, die in ein (nicht dargestelltes) Gehäuse eines Schaltgetriebes von Kraftfahrzeugen integriert werden. Solche Getriebe haben Schaltgabeln, die von den Aktuatoren 1 betätigt werden, um z. B. eine Schaltwelle zur Gassenwahl und zum Einlegen des Ganges zu drehen und zu verschieben. Bei der Ausführungsform nach den Fig. 1 und 2 ist die (nicht dargestellte) Schaltgabel mit einem Zwischenstück 2 des Aktuators 1 verbunden, das mittels zweier Kolben 3, 4 in einem Zylindergehäuse 5 axial verschiebbar ist. Das Gehäuse 5 besteht aus Leichtmetall, vorzugsweise aus Aluminium, so daß es ein relativ geringes Gewicht hat. Im Mantel 6 des Zylindergehäuses 5 ist in bekannter Weise eine Eingriffsöffnung 7 für den Durchtritt der Schaltgabel vorgesehen. An seiner einen Stirnseite ist das Gehäuse 5 mit einem scheibenartig ausgebildeten Deckel 8 verschlossen, der durch einen Sicherungsring 9 in seiner Einbaulage gesichert ist. Der Deckel 8 liegt mit seinem Rand auf einer radialen Ringschulter 10 an der Innenseite 12 des Gehäuses 5 auf. Der Sicherungsring 9 wird in einer Ringnut 11 in der Innenseite 12 des Gehäuses 5 gehalten.

Die Kolben 3, 4 sind durch Hülsen gebildet, die gleich ausgebildet sind. Sie bestehen ebenfalls aus Leichtmetall, vorzugsweise aus Aluminium. Die Kolben 3, 4 sind dickwandiger ausgebildet als das Zylindergehäuse 5 und sitzen auf zapfenartigen Ansätzen 24, 25 des Zwischenstückes 2. Die koaxial zueinander liegenden Ansätze stehen von einem zylindrischen Mittelstück 19 ab, das eine mittig liegende Ringnut 20 aufweist, in die die Schaltgabel eingreift. Die Ringnut 20 wird axial von jeweils einem Flansch 22, 23 begrenzt, deren Außendurchmesser geringfügig kleiner ist als der Innendurchmesser des Gehäuses 5. Die Ansätze 24, 25 schließen mittig an die voneinander abgewandten Stirnflächen 22', 23' der Flansche 22, 23 an.

Anstelle der Ringnut 20 kann das Mittelstück 19 auch zwei oder mehrere Abflachungen aufweisen.

Das Zwischenstück 2 ist einstückig ausgebildet und besteht aus verschleißfestem Material, vorzugsweise aus Stahl. Der Durchmesser der Ansätze 24, 25 ist kleiner als der Innendurchmesser der Kolben 3, 4. Dadurch liegt das Zwischenstück 2 mit seinen Ansätzen 24, 25 mit radialem Spiel in den Kolben 3, 4. Die Kolben 3, 4 und/oder das Zwischenstück 2 müssen nicht mit engen Toleranzen hergestellt werden, so daß der Aktuator 1 kostengünstig hergestellt werden kann. In den Fig. 1 und 2 ist dargestellt, daß die Axialöffnungen 13, 14 der Kolben 3, 4 außermittig liegen. Aufgrund des beschriebenen Radialspieles ist dennoch gewährleistet, daß das Zwischenstück 2 von den Kolben 3, 4 zuverlässig mitgenommen wird.

Der Außendurchmesser der Kolben 3, 4 ist an den Innendurchmesser des Gehäuses 5 so angepaßt, daß die Kolben 3, 4 im Gehäuse 5 geführt werden.

Die Ansätze 24, 25 und die Kolben 3, 4 sind vorteilhaft gleich lang. Das Mittelstück 19 ist kürzer als die Kolben 3, 4, kann aber je nach Ausbildung und/oder Einsatzfall des Aktuators 1 gleich lang oder länger als die Kolben 3, 4 sein.

Fig. 1 zeigt das Zwischenstück 2 in einer Mittelstellung, in der das Mittelstück 19 in Höhe der Eingriffsöffnung 7 des Gehäuses 5 liegt. Die axiale Länge des Mittelstückes 19 entspricht im Ausführungsbeispiel der axialen Breite des Eingrifföffnung 7.

lm Bereich zwischen den Kolben 3, 4 und dem Deckel 8 sowie einem gegenüberliegenden Boden 26 des Gehäuses 5 befindet sich jeweils ein Druckraum 41, 42, in den das Druckmedium, das z. B. Öl oder Druckluft sein kann, ventilgesteuert eingebracht werden kann. Die in die Druckräume 41, 42 mündenden Bohrungen sind nicht dargestellt.

In der in Fig. 1 dargestellten Mittelstellung steht das Druckmedium in beiden Druckräumen 41, 42 unter Druck. Die vom Druckmedium beaufschlagten Flächen der Kolben 3, 4 und der Ansätze 24, 25 in den Druckräumen 41, 42 sind gleich. Die Kolben 3, 4 liegen unter dem Druck des Druckmediums an den ringförmigen Stirnflächen 22', 23' der Flansche 22, 23 an. Soll das Zwischenstück 2 verschoben werden, wird der entsprechende Druckraum 41 bzw. 42 druckentlastet, so daß das Zwischenstück 2 mit dem entsprechenden Kolben 3 bzw. 4 in die gewünschte Richtung so weit verschoben wird, daß der Kolben 3 bzw. 4 am Boden 26 bzw. am Deckel 8 zur Anlage kommt oder innerhalb des Schaltgetriebes eine Anschlagstellung erreicht wird, bevor die Kolben 3, 4 ihre Anschlagstellung erreicht haben.

Fig. 2 zeigt den Fall, daß der Druckraum 42 druckentlastet worden ist, während das Druckmedium im Druckraum 41 weiterhin unter Druck steht. Dadurch wird das Zwischenstück 2 und die mit ihm in Eingriff befindliche Schaltgabel verschoben. Das Mittelstück 19 nimmt in bezug auf die Eingriffsöffnung 7 des Gehäuses 5 eine solche Lage ein, daß die Schaltgabel in dieser verschobenen Lage des Zwischenstückes 2 nicht mit dem Rand der Eingriffsöffnung 7 kollidiert.

Die Abmessungen der Ansätze 24, 25 des Zwischenstückes 2, der Kolben 3, 4 und des Gehäuses 5 sind so gewählt, daß die Ansätze 24, 25 bei maximal verschobenem Kolben relativ zum Zwischenstück 2 nicht außer Eingriff mit dem jeweiligen Kolben kommen. In Fig. 2 liegt der Kolben 3 am Boden 26 des Gehäuses 5 an. Der Kolben 3 liegt mit axialem Abstand von der Eingriffsöffnung 7, während der Ansatz 24 noch in den Kolben 3 eingreift.

Durch die beschriebene Ausbildung ist gewährleistet, daß der Aktuator 1 nur geringes Gewicht hat, da das Zylindergehäuse 5 und die Kolben 3, 4 aus Leichtmetall bestehen. Das vorzugsweise aus Stahl bestehende Zwischenstück 2 gewährleistet eine einwandfreie Kraftübertragung auf die Schaltgabel. Da das Mittelstück 19 des Zwischenstückes 2 eine harte und verschleißfeste Oberfläche hat, können die Schaltgabeln im Getriebe hohe Kräfte übertragen, ohne daß ein frühzeitiger Verschleiß der Kontaktflächen zwischen der Schaltgabel und dem Mittelstück 19 zu befürchten ist. Durch die lose Anordnung der Kolben 3, 4 auf dem Zwischenstück 2 können sich die Vorrichtungsteile einwandfrei gegeneinander ausrichten und eine optimale Lage zueinander einnehmen. Die einzelnen Teile können preisgünstig hergestellt werden, da bei der Herstellung auf keine engen Toleranzen geachtet werden muß. Lediglich die Umfangsflächen bzw. Laufflächen 27, 28 der Kolben 3, 4 sind an die Innenwand 12 des Zylindergehäuses 5 genau anzupassen, um eine Leckage der Vorrichtung 1 niedrig zu halten. Die Vorrichtungsteile können infolge der beschriebenen Ausbildung auf einer Drehmaschine komplett gefertigt und zusammengefügt und in das Aktuatorgehäuse 5 eingesetzt werden.

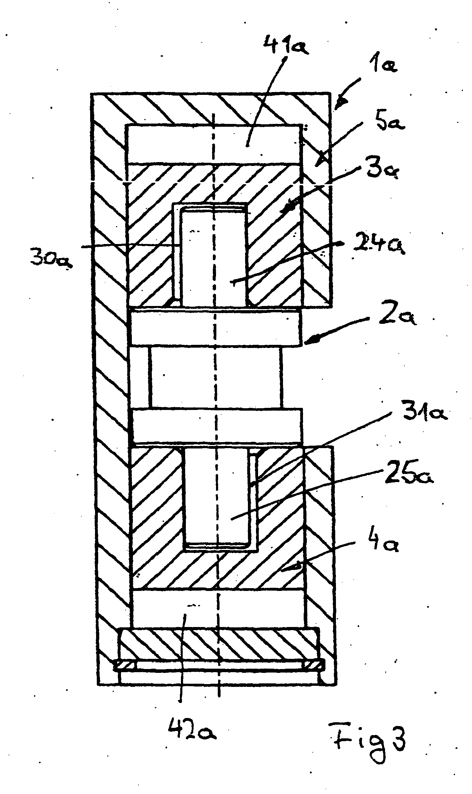

Die Ausführungsform gemäß Fig. 3 unterscheidet sich von der zuvor beschriebenen Ausführungsform dadurch, daß einerseits die Ansätze 24a und 25a des Zwischenstückes 2a kürzer ausgebildet sind als die Ansätze 24, 25 und andererseits die Kolben 3a und 4a napfförmig ausgebildet sind. Dadurch ragen die Ansätze 24a, 25a in Sacklochbohrungen 30a, 31a der Kolben 3a, 4a. Die Kolben 3a, 4a und die Ansätze 24a, 25a sind wiederum so lang, daß die Ansätze nicht außer Eingriff mit den Kolben kommen können. Im übrigen ist der Aktuator 1a mit seinem Gehäuse 5a gleich ausgebildet wie die vorige Ausführungsform.

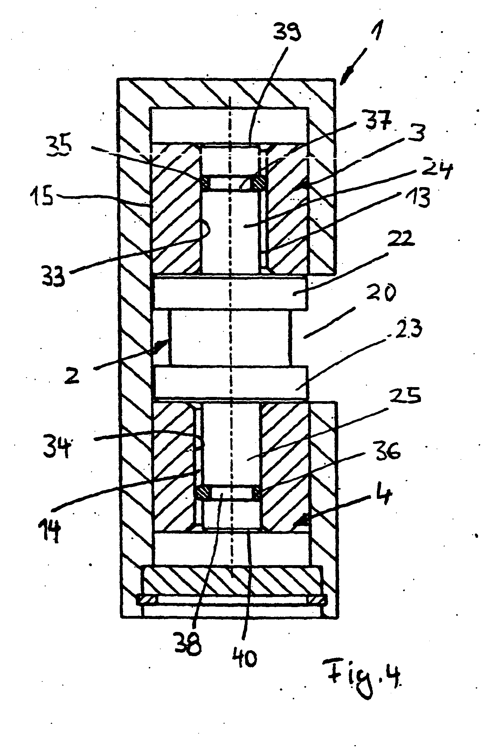

Die Ausführungsform gemäß Fig. 4 unterscheidet sich von der nach den Fig. 1 und 2 nur dadurch, daß zur Vermeidung einer Leckage Dichtungen 35, 36 vorgesehen sind, die als O-Ringe ausgebildet sind und jeweils in einer Ringnut 37, 38 der Ansätze 24, 25 der Kolben 3, 4 liegen. Die Ringnuten 37, 38 liegen mit kleinerem Abstand von den Stirnflächen 39, 40 der Ansätze 24, 25 als von den benachbarten Flanschen 22, 23 des Mittelstückes 19 des Zwischenstückes 2. In der Einbaulage sind die Ringdichtungen 35, 36 elastisch verformt und liegen dichtend an der Innenwand 33, 34 der Kolben 3, 4 an. Die Ringnuten können auch in der Innenwandung der Kolben 3, 4 vorgesehen sein. Die Ausführungsform nach Fig. 4 wird vorteilhaft dann eingesetzt, wenn nur geringe Geräusche auftreten sollen und an die Leckage höhere Anforderungen gestellt werden.

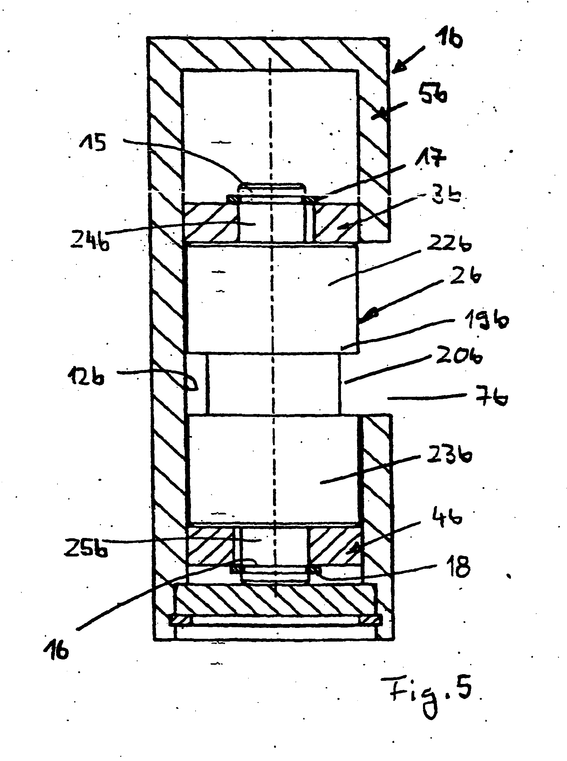

Von der zuvor beschriebenen Ausführungsform unterscheidet sich die Vorrichtung 1b gemäß Fig. 5 dadurch, daß die Kolben 3b, 4b als relativ schmale Ringe ausgebildet sind und daß das Zwischenstück 2b nur kurze Ansätze 24b, 25b, aber ein relativ langes Mittelstück 19b aufweist. Die Ansätze 24b, 25b sind um Mehrfaches kürzer als das Mittelstück 19b und stehen geringfügig über die Kolben 3b, 4b vor. An ihrem überstehenden Abschnitt weisen die Kolben 3b, 4b jeweils eine Ringnut 15, 16 zur Aufnahme eines Sicherungsringes 17, 18 auf, mit dem der Kolben 3b, 4b auf dem Ansatz 24b, 25b axial gesichert ist. Die Kolben 3b, 4b liegen an den Flanschen 22b, 23b des Zwischenstückes 2b an. Die Sicherungsringe 17, 18 stellen sicher, daß die Ansätze 24b, 25b nicht außer Eingriff mit dem Kolben 3b, 4b gelangen.

Die Ringnut 20b des Mittelstückes 19b ist etwa gleich groß wie bei den zuvor beschriebenen Ausführungsformen. Die Flansche 22b, 23b sind jedoch wesentlich breiter als bei den übrigen Ausführungsformen. Die Ringnut 20b ist dadurch axial schmaler als die Flansche 22b, 23b. Die Eingriffsöffnung 7b des Gehäuses 5b für die Schaltgabel ist axial breiter als bei den zuvor beschriebenen Ausführungsformen, so daß die Schaltgabel trotz der breiten Flansche 22b, 23b in jeder Lage des Zwischenstückes 2b ungehindert durch die Eingriffsöffnung 7b des Gehäuses 5b ragen kann. Das Zwischenstück 2b ist so lang, daß die Kolben 3b, 4b in jeder axialen Lage des Zwischenstückes 2b an der Innenwand 12b des Gehäuses 5b anliegen und nicht in den Bereich der Eingriffsöffnung 7b gelangen. Im übrigen ist diese Ausführungsform gleich ausgebildet und arbeitet gleich wie die vorigen Ausführungsbeispiele.

## Patentansprüche

1. Betätigungsvorrichtung; (1) insbesondere Hydraulik- oder Pneumatikaktor für Schaltgetriebe von Kraftfahrzeugen mit einem Gehäuse (5), in dem zwei Kolben (3, 4) untergebracht sind, mit denen ein Kupplungsteil (2; 2a; 2b) verschiebbar ist, das mit einem Schaltteil, vorzugsweise einer Schaltgabel, verbindbar ist,
**dadurch gekennzeichnet, dass**
das Kupplungsteil (2; 2a; 2b) zumindest an seiner Oberfläche aus Stahl, besteht und ein Eingriffsstück (19, 19b) für das Schaltteil aufweist, von dem vorteilhaft axial Ansätze (24, 25; 24a, 25a, 24b, 25b) abstehen, auf denen die Kolben (3, 4; 3a, 4a; 3b, 4b) lose sitzen, wobei das Gehäuse (5) aus Leichtmetall besteht und die beiden Kolben (3, 4; 3a, 4a; 3b, 4b) aus Leichtmetall, vorzugsweise aus Aluminium,
bestehen und ohne enge Toleranzen lose auf dem Kupplungsteil (2; 2a; 2b) sitzen, wohingegen der Außendurchmesser der Laufflächen des Kolbens (3, 4; 3a, 4a; 3b, 4b) gegenüber dem Innendurchmesser so genau angepasst ist, dass der Kolben (3, 4; 3a, 4a; 3b, 4b) im Gehäuse (5) geführt ist und Leckagen der Betätigungseinrichtung (1) weitgehend vermieden werden.

2. Vorrichtung nach Anspruch 1,
**dadurch gekennzeichnet, dass** die beiden Kolben (3, 4; 3a, 4a; 3b, 4b) gleich ausgebildet sind.

3. Vorrichtung nach Anspruch 1 oder 2,
**dadurch gekennzeichnet, dass** die Kolben (3, 4; 3a, 4a; 3b, 4b) mit Radialspiel auf dem Kupplungsteil (2; 2a; 2b) sitzen.

4. Vorrichtung nach Anspruch 1,
**dadurch gekennzeichnet, dass** das Eingriffsstück (19, 19b) in halber Länge des Kupplungsteiles (2; 2a; 2b) vorgesehen ist.

5. Vorrichtung nach Anspruch 1 oder 4,
**dadurch gekennzeichnet, dass** die Ansätze (24, 25; 24a, 25a; 24b, 25b) fluchtend zueinander liegen und vorteilhaft gleich lang sind.

6. Vorrichtung nach einem der Ansprüche 1, 4 oder 5,
**dadurch gekennzeichnet, dass** das Eingriffstück (19; 19b) wenigstens eine vorteilhaft von zwei Flanschen (22, 23; 22b, 23b) axial begrenzte Nut (20; 20b) für das Eingriffsteil (19; 19b) aufweist.

7. Vorrichtung nach Anspruch 6,
**dadurch gekennzeichnet, dass** die Ansätze (24, 25; 24a, 25a; 24b, 25b) von den Flanschen (22, 23; 22b, 23b) quer abstehen.

8. Vorrichtung nach Anspruch 6 oder 7,
**dadurch gekennzeichnet, dass** der Außendurchmesser der Flansche (22, 23; 22b, 23b) kleiner ist als der Innendurchmesser des Gehäuses (5; 5a; 5b).

9. Vorrichtung nach einem der Ansprüche 1 bis 8,
**dadurch gekennzeichnet, dass** das Kupplungsteil (2; 2a; 2b) einstückig ausgebildet ist.

10. Vorrichtung nach einem der Ansprüche 1 bis 9,
**dadurch gekennzeichnet, dass** das Kupplungsteil (2; 2a; 2b) aus Stahl besteht.

11. Vorrichtung nach einem der Ansprüche 1 bis 10,
**dadurch gekennzeichnet, dass** die Kolben (3, 4; 3b, 4b) hülsenförmig oder ringförmig ausgebildet sind.

12. Vorrichtung nach einem der Ansprüche 1 bis 10,
**dadurch gekennzeichnet, dass** die Kolben (3a, 4a) napfförmig ausgebildet sind.

13. Vorrichtung nach einem der Ansprüche 5 bis 12,
**dadurch gekennzeichnet, dass** die Kolben (3, 4; 3a, 4a; 3b, 4b) etwa gleiche Länge haben wie die Ansätze (24, 25; 24a, 25a; 24b, 25b) des Kupplungsteiles (2; 2a; 2b).

14. Vorrichtung nach einem der Ansprüche 1 bis 11 oder 13,
**dadurch gekennzeichnet, dass** die Kolben (3b, 4b) durch jeweils einen Sicherungsring (17, 18) axial gesichert auf den Ansätzen (24b, 25b) des Kupplungsteiles (2b) sitzen.

15. Vorrichtung nach einem der Ansprüche 6 bis 14,
**dadurch gekennzeichnet, dass** die Kolben (3, 4; 3a, 4a; 3b, 4b) zumindest unter Druckbeaufschlagung an den Flanschen (22, 23; 22b, 23b) des Eingriffsstückes (19; 19b) anliegen.

16. Vorrichtung nach einem der Ansprüche 1 bis 15,
**dadurch gekennzeichnet, dass** das Gehäuse (5; 5a; 5b) eine Öffnung (7; 7b) für den Durchtritt des Schaltteiles aufweist, deren axiale Breite vorteilhaft etwa der axialen Breite des Eingriffsstückes (19; 19b) des Kupplungsteiles (2; 2a; 2b) entspricht.

17. Vorrichtung nach einem der Ansprüche 5 bis 16,
**dadurch gekennzeichnet, dass** der maximale Hub des Kupplungsteiles (2; 2a) kleiner ist als die Führungslänge der Ansätze (24, 25; 24a, 25a) in den Kolben (3, 4; 3a, 4a; 3b, 4b).

18. Vorrichtung nach einem der Ansprüche 1 bis 17,
**dadurch gekennzeichnet, dass** die beiden Kolben (3, 4; 3a, 4a; 3b, 4b) aus Leichtmetall, vorzugsweise aus Aluminium, bestehen.

19. Vorrichtung nach einem der Ansprüche 5 bis 18,
**dadurch gekennzeichnet, dass** innerhalb der Kolben (3, 4) auf den Ansätzen (24, 25) jeweils eine vorteilhaft durch Runddichtungen gebildete Dichtung (35, 36) sitzt.

20. Vorrichtung nach Anspruch 19,
**dadurch gekennzeichnet, dass** die Dichtungen (35, 36) in Ringnuten (37, 38) der Ansätze (24, 25) oder der Kolben (3, 4) angeordnet sind.

21. Vorrichtung nach einem der Ansprüche 1 bis 20,
**dadurch gekennzeichnet, dass** das Gehäuse (5; 5a; 5b) an einem Ende durch einen Boden (26) und am anderen Ende durch einen eingesetzten Deckel (8) geschlossen ist, und dass vorteilhaft der Boden (26) und der Deckel (8) mit dem jeweils benachbarten Kolben (3, 4; 3a, 4a; 3b, 4b) einen Druckraum (41, 42) begrenzen.

## Claims

1. Actuating device, (1) in particular a hydraulic or pneumatic actuator for shift transmissions of motor vehicles having a housing (5), which accommodates two pistons (3, 4), by means of which a clutch part (2; 2a; 2b) is displaceable, which is connectable to a shift part, preferably a shift fork,
**characterized in that**
the clutch part (2; 2a; 2b) at least at its surface is made of steel and has for the shift part a contact piece (19; 19b), from which advantageously axial lugs (24, 25; 24a, 25a; 24b, 25b) project, on which the pistons (3, 4; 3a, 4a; 3b, 4b) are loosely seated, wherein the housing (5) is made of light metal and the two pistons (3, 4; 3a, 4a; 3b, 4b) are made of light metal, preferably of aluminium, and are seated without close tolerances loosely on the clutch part (2; 2a; 2b), while the outside diameter of the running surfaces of the piston (3, 4; 3a, 4a; 3b, 4b) is adapted relative to the inside diameter so precisely that the piston (3, 4; 3a, 4a; 3b, 4b) is guided in the housing (5) and leakages of the actuating device (1) are extensively avoided.

2. Device according to claim 1,
**characterized in that** the two pistons (3, 4; 3a, 4a; 3b, 4b) are of an identical design.

3. Device according to claim 1 or 2,
**characterized in that** the two pistons (3, 4; 3a, 4a; 3b, 4b) are seated with radial play on the clutch part (2; 2a; 2b).

4. Device according to claim 1,
**characterized in that** the contact piece (19, 19b) is provided in half the length of the clutch part (2; 2a; 2b).

5. Device according to claim 1 or 4,
**characterized in that** the lugs (24, 25; 24a, 25a; 24b, 25b) are aligned with one another and advantageously identical in length.

6. Device according to one of claims 1, 4 or 5,
**characterized in that** the contact piece (19; 19b) has at least one groove (20; 20b) for the contact part (19; 19b) that is advantageously axially delimited by two flanges (22, 23; 22b, 23b).

7. Device according to claim 6,
**characterized in that** the lugs (24, 25; 24a, 25a; 24b, 25b) project transversely from the flanges (22, 23; 22b, 23b).

8. Device according to claim 6 or 7,
**characterized in that** the outside diameter of the flanges (22, 23; 22b, 23b) is smaller than the inside diameter of the housing (5; 5a; 5b).

9. Device according to one of claims 1 to 8,
**characterized in that** the clutch part (2; 2a; 2b) is of an integral design.

10. Device according to one of claims 1 to 9,
**characterized in that** the clutch part (2; 2a; 2b) is made of steel.

11. Device according to one of claims 1 to 10,
**characterized in that** the pistons (3, 4; 3b, 4b) are of a sleeve-shaped or annular design.

12. Device according to one of claims 1 to 10,
**characterized in that** the pistons (3a, 4a) are of a cup-shaped design.

13. Device according to one of claims 5 to 12,
**characterized in that** the pistons (3, 4; 3a, 4a; 3b, 4b) are approximately of the same length as the lugs (24, 25; 24a, 25a; 24b, 25b) of the clutch part (2; 2a; 2b).

14. Device according to one of claims 1 to 11 or 13,
**characterized in that** the pistons (3b, 4b) are seated and axially secured by means of in each case one locking ring (17, 18) on the lugs (24b, 25b) of the clutch part (2b).

15. Device according to one of claims 6 to 14,
**characterized in that** the pistons (3, 4; 3a, 4a; 3b, 4b) rest at least under pressurization against the flanges (22, 23; 22b, 23b) of the contact piece (19; 19b).

16. Device according to one of claims 1 to 15,
**characterized in that** the housing (5; 5a; 5b) has an opening (7; 7b) for passage of a shift part, the axial width of which opening advantageously corresponds approximately to the axial width of the contact piece (19; 19b) of the clutch part (2; 2a; 2b).

17. Device according to one of claims 5 to 16,
**characterized in that** the maximum travel of the clutch part (2; 2a) is smaller than the guide length of the lugs (24, 25; 24a, 25a) in the pistons (3, 4; 3a, 4a; 3b, 4b).

18. Device according to one of claims 1 to 17,
**characterized in that** the two pistons (3, 4; 3a, 4a; 3b, 4b) are made of light metal, preferably of aluminium.

19. Device according to one of claims 5 to 18,
**characterized in that** inside the pistons (3, 4) there is seated on each of the lugs (24, 25) a seal (35, 36) that is advantageously formed by O-rings.

20. Device according to claim 19,
**characterized in that** the seals (35, 36) are disposed in annular grooves (37, 38) of the lugs (24, 25) or of the pistons (3, 4).

21. Device according to one of claims 1 to 20,
**characterized in that** the housing (5; 5a; 5b) is closed at one end by a base (26) and at the other end by a fitted lid (8) and that advantageously the base (26) and the lid (8) together with the respective adjacent piston (3, 4; 3a, 4a, 3b, 4b) delimit a pressure chamber (41, 42).

## Revendications

1. Organe de commande (1), notamment vérin hydraulique ou pneumatique pour une boîte de vitesses de véhicule automobile avec un carter (5) dans lequel deux pistons (3, 4) sont disposés et avec lesquels une partie d'embrayage (2 ; 2a ; 2b) peut être déplacée, ladite partie d'embrayage pouvant être reliée à une partie de changement de vitesses, de préférence une fourchette de changement de vitesses, **caractérisé en ce que**
la partie d'embrayage (2 ; 2a ; 2b) est en acier au moins au niveau de sa surface et qu'elle présente une pièce de mise en prise (19, 19b) pour la partie de changement de vitesses, hors de laquelle des saillies (24, 25 ; 24a, 25a ; 24b, 25b) ressortent de façon avantageuse dans le plan axial, sur lesquelles les pistons (3, 4 ; 3a, 4a ; 3b, 4b) reposent de façon détachée, le carter (5) étant en métal léger et les deux pistons (3, 4 ; 3a, 4a ; 3b, 4b) étant en métal léger, de préférence en aluminium, et reposant sans tolérance étroite de façon détachée sur la partie d'embrayage (2 ; 2a ; 2b), tandis que le diamètre extérieur des surfaces de glissement du piston (3, 4 ; 3a, 4a ; 3b, 4b) est adapté à un niveau de précision tel au diamètre intérieur que le piston (3, 4 ; 3a, 4a ; 3b, 4b) est guidé dans le carter (5), permettant ainsi d'éviter en grande partie des fuites de l'organe de commande (1).

2. Organe selon la revendication 1, **caractérisé en ce que** les deux pistons (3, 4 ; 3a, 4a ; 3b, 4b) sont configurés de façon identique.

3. Organe selon la revendication 1 ou 2, **caractérisé en ce que** les pistons (3, 4 ; 3a, 4a ; 3b, 4b) reposent sur la partie d'embrayage (2 ; 2a ; 2b) avec un jeu radial.

4. Organe selon la revendication 1, **caractérisé en ce que** la pièce de mise en prise (19, 19b) est prévue à la moitié de la longueur de la partie d'embrayage (2 ; 2a ; 2b).

5. Organe selon la revendication 1 ou 4, **caractérisé en ce que** les saillies (24, 25 ; 24a, 25a ; 24b, 25b) sont alignées les unes par rapport aux autres et sont de façon avantageuse de longueur identique.

6. Organe selon l'une quelconque des revendications 1, 4 ou 5, **caractérisé en ce que** la pièce de mise en prise (19 ; 19b) présente au moins une rainure (20 ; 20b) délimitée de façon avantageuse par deux brides (22, 23 ; 22b, 23b) dans le plan axial pour la partie de mise en prise (19 ; 19b).

7. Organe selon la revendication 6, **caractérisé en ce que** les saillies (24, 25 ; 24a, 25a ; 24b, 25b) sont perpendiculaires aux brides (22, 23 ; 22b, 23b).

8. Organe selon la revendication 6 ou 7, **caractérisé en ce que** le diamètre extérieur des brides (22, 23 ; 22b, 23b) est inférieur au diamètre intérieur du carter (5 ; 5a ; 5b).

9. Organe selon l'une quelconque des revendications 1 à 8, **caractérisé en ce que** la partie d'embrayage (2 ; 2a ; 2b) est réalisée d'un seul tenant.

10. Organe selon l'une quelconque des revendications 1 à 9, **caractérisé en ce que** la partie d'embrayage (2 ; 2a ; 2b) est en acier.

11. Organe selon l'une quelconque des revendications 1 à 10, **caractérisé en ce que** les pistons (3, 4 ; 3b, 4b) prennent une forme d'enveloppe ou une forme annulaire.

12. Organe selon l'une quelconque des revendications 1 à 10, **caractérisé en ce que** les pistons (3a, 4a) prennent une forme d'écuelle.

13. Organe selon l'une quelconque des revendications 5 à 12, **caractérisé en ce que** les pistons (3, 4 ; 3a, 4a ; 3b, 4b) ont approximativement la même longueur que les saillies (24, 25 ; 24a, 25a ; 24b, 25b) de la partie d'embrayage (2 ; 2a ; 2b).

14. Organe selon l'une quelconque des revendications 1 à 11 ou 13, **caractérisé en ce que** les pistons (3b, 4b) sont respectivement fixés dans le plan axial à l'aide d'une bague de fixation (17, 18) et reposent sur les saillies (24b, 25b) de la partie d'embrayage (2b).

15. Organe selon l'une quelconque des revendications 6 à 14, **caractérisé en ce que** les pistons (3, 4 ; 3a, 4a ; 3b, 4b) appuient au moins lorsqu'ils sont alimentés en pression contre les brides (22, 23; 22b, 23b) de la pièce de mise en prise (19 ; 19b).

16. Organe selon l'une quelconque des revendications 1 à 15, **caractérisé en ce que** le carter (5 ; 5a ; 5b) présente une ouverture (7 ; 7b) pour le passage de la partie de changement de vitesses, la largeur axiale dudit passage correspondant de façon avantageuse approximativement à la largeur axiale de la pièce de mise en prise (19 ; 19b) de la partie d'embrayage (2 ; 2a ; 2b).

17. Organe selon l'une quelconque des revendications 5 à 16, **caractérisé en ce que** la levée maximale de la partie d'embrayage (2 ; 2a) est inférieure à la longueur d'introduction des saillies (24, 25 ; 24a, 25a) dans les pistons (3, 4 ; 3a, 4a ; 3b, 4b).

18. Organe selon l'une quelconque des revendications 1 à 17, **caractérisé en ce que** les deux pistons (3, 4 ; 3a, 4a ; 3b, 4b) sont en métal léger, de préférence en aluminium.

19. Organe selon l'une quelconque des revendications 5 à 18, **caractérisé en ce qu'**un joint d'étanchéité (35, 36) formé de façon avantageuse par des joints d'étanchéité ronds repose respectivement sur les saillies (24, 25) à l'intérieur des pistons (3, 4).

20. Organe selon la revendication 19, **caractérisé en ce que** les joints d'étanchéité (35, 36) sont disposés dans les rainures annulaires (37, 38) des saillies (24, 25) ou des pistons (3, 4).

21. Organe selon l'une quelconque des revendications 1 à 20, **caractérisé en ce que** le carter (5 ; 5a ; 5b) est fermé à une extrémité par un fond (26) et au niveau de l'autre extrémité par un couvercle (8) inséré et **en ce que** le fond (26) et le couvercle (8) délimitent de façon avantageuse un espace de compression (41, 42) avec le piston (3, 4 ; 3a, 4a ; 3b, 4b) connexe respectif.
